Europäisches Patentamt

(19) European Patent Office

Office européen des brevets

(11) **EP 1 153 286 B1**

(12) **EUROPÄISCHE PATENTSCHRIFT**

(45) Veröffentlichungstag und Bekanntmachung des Hinweises auf die Patenterteilung:
**09.02.2005 Patentblatt 2005/06**

(21) Anmeldenummer: **99967932.7**

(22) Anmeldetag: **11.12.1999**

(51) Int Cl.⁷: $G01N\ 27/414$

(86) Internationale Anmeldenummer:
**PCT/EP1999/009804**

(87) Internationale Veröffentlichungsnummer:
**WO 2000/036408 (22.06.2000 Gazette 2000/25)**

(54) **VORRICHTUNG ZUM MESSEN DER KONZENTRATION VON IONEN IN EINER MESSFLÜSSIGKEIT**

DEVICE FOR MEASURING ION CONCENTRATIONS IN A MEASURING LIQUID

DISPOSITIF PERMETTANT DE MESURER LA CONCENTRATION IONIQUE D'UN FLUIDE

(84) Benannte Vertragsstaaten:
**AT DE FR GB IT NL**

(30) Priorität: **16.12.1998 DE 19857953**

(43) Veröffentlichungstag der Anmeldung:
**14.11.2001 Patentblatt 2001/46**

(73) Patentinhaber: **Endress + Hauser Conducta Gesellschaft für Mess- und Regeltechnik mbH + Co.KG.**
**D-70839 Gerlingen (DE)**

(72) Erfinder: **PECHSTEIN, Torsten**
**D-04736 Waldheim (DE)**

(74) Vertreter: **Dreiss, Fuhlendorf, Steimle & Becker Patentanwälte,**
**Postfach 10 37 62**
**70032 Stuttgart (DE)**

(56) Entgegenhaltungen:
**EP-A- 0 155 725          EP-A- 0 315 790**
**EP-A- 0 751 392          US-A- 4 334 880**

- **P. BERGVELD, A. SIBBALD: "Analytical and Biomedical Applications of Ion-Selective Field-Effect Transistors" 1. Januar 1988 (1988-01-01) , ELSEVIER SCIENCE LTD XP000886684 in der Anmeldung erwähnt Seite 101 -Seite 107**

**Beschreibung**

Die vorliegende Erfindung betrifft eine Vorrichtung zum Messen der Konzentration von Ionen, insbesondere von Wasserstoff (H⁺)-Ionen, in einer Messflüssigkeit. Die Messung erfolgt mittels mindestens eines in der Messflüssigkeit angeordneten Ionen-Sensitiven-Feld-Effekt-Transistors (pH-ISFET), der zusammen mit Widerständen in einer Brückenschaltung geschaltet ist. An Einspeisestellen der Brückenschaltung liegt eine Brückenspeisespannung an. Die Vorrichtung liefert ein Ausgangssignal, das ein Maß für die Ionen-Konzentration in der Messflüssigkeit ist. Die Vorrichtung weist eine Referenzelektrode auf, die ebenfalls in der Messflüssigkeit angeordnet ist.

Derartige Vorrichtungen werden üblicherweise zur Messung des pH-Werts der Messflüssigkeit verwendet. Der pH-Wert wird von einer Vielzahl in der Messflüssigkeit gelöster Inhaltsstoffe bestimmt, bspw. von der Konzentration der H⁺- oder der OH⁻-Ionen.

Bei kommunaler und industrieller Abwasseraufbereitung werden chemische Reaktionen genutzt, um bestimmte Inhaltsstoffe auszufällen, das Wasser zu neutralisieren und zu entgiften. Der pH-Wert spielt für den richtigen Ablauf dieser Reaktionen eine Schlüsselrolle. Die mechanischen Absetzvorgänge in den Kläranlagen können durch saure oder alkalische Abwässer ungünstig beeinflusst werden. Die biologischen Vorgänge bei der Selbstreinigung der Gewässer oder in den aeroben und anaeroben biologischen Stufen der Kläranlagen sind ebenfalls an bestimmte pH-Werte gebunden und werden bei Abweichungen von diesen in ihrem Ablauf gestört. Zur Automatisierung dieser Betriebsabläufe ist eine kontinuierliche Messung des pH-Werts unentbehrlich.

Die Konzentration von H⁺-Ionen in einer Messflüssigkeit kann bspw. mittels eines ionensensitiven Feldeffekttransistors (pH-ISFET), insbesondere mittels eines Wasserstoff-ISFET gemessen werden. pH-ISFETs haben gegenüber herkömmlichen Glaselektroden-Messketten den Vorteil, dass sie alterungsunempfindlich sind und deshalb eine wesentlich höhere Standzeit aufweisen. Der Widerstand des Kanals des pH-ISFETs, und damit das Gatepotential, ändert sich linear zu der Konzentration der H⁺-Ionen in der Messflüssigkeit. Damit der pH-ISFET ein Ausgangssignal liefert, das zu der an dem pH-ISFET anliegenden Eingangsspannung proportional ist, liegt an dem pH-ISFET ein konstanter Drain-Strom an. Als Ausgangssignal liefert der pH-ISFET bspw. eine Ausgangsspannung. Diese Ausgangsspannung wird gegen eine von der Konzentration der H⁺-Ionen nicht beeinflußbare Referenzelektronde gemessen, die ebenfalls in der Messflüssigkeit angeordnet ist.

Aus der EP 0 155 725 A1 ist eine Vorrichtung der eingangs genannten Art bekannt, bei der ein pH-ISFET und ein Referenz-ISFET zusammen mit zwei Widerständen in einer Brückenschaltung geschaltet sind.

Aus der US 4,334,880 ist eine weitere Vorrichtung der eingangs genannten Art, allerdings ohne eine Referenzelektrode, bekannt, wobei auch hier ein pH-ISFET mit drei Widerständen in einer Brückenschaltung geschaltet ist. Als Ausgangssignal der beiden Vorrichtungen wird die Diagonalspannung der Brückenschaltung herangezogen. Während des Messvorgangs verändert sich die Leitfähigkeit des pH-ISFET in Abhängigkeit von der Ionen-Konzentration in der Messflüssigkeit, wodurch die Messbrücke verstimmt wird und sich eine Diagonalspannung ausbildet.

Die aus dem Stand der Technik bekannten Vorrichtungen unterscheiden sich untereinander insbesondere in der Art und Weise, wie der pH-ISFET in die Schaltung der Vorrichtung integriert ist. In Analytical and Biomedical Applications of Ion-Selective Field-Effect Transistors, P. Bergveld, A. Sibbald, Elsevier Science Publishers B.V., Amsterdam 1988, Chapter 8, ISFET instrumentation, S. 101-107 sind unterschiedliche Arten der Beschaltung eines pH-ISFET in einer Vorrichtung der eingangs genannten Art offenbart.

Dort ist in Fig. 8.3 ein Schaltplan dargestellt, der in Kapitel 8.5 (a.a.O., S. 104 f.) näher erläutert wird. Demnach ist der pH-ISFET in einen Elektrometersubtrahierer (mit den Operationsverstärkern $A_1$, $A_2$, $A_3$) integriert, und zwar derart, dass er an Stelle desjenigen Widerstands des Elektrometersubtrahierers in der Schaltung angeordnet ist, durch den der Verstärkungsfaktor des Elektrometersubtrahierers eingestellt werden kann. Der Elektrometersubtrahierer weist eine Energieversorgung auf mit einer Stromquelle, die einen konstanten Strom I liefert, und einer einstellbaren Referenzspannung $V_{ref}$. Am Eingang des Elektrometersubtrahierers liegt an einem Widerstand $R_1$ eine konstante Spannung $I \cdot R_1$ an. Als Ausgangssignal liefert der Elektrometersubtrahierer eine Ausgangsspannung, die umgekehrt proportional zu dem Widerstand des Kanals des pH-ISFETs ist. Die Ausgangsspannung wird mittels eines Invertierers ($A_4$) invertiert. Schließlich wird die Differenz zwischen der invertierten Ausgangsspannung und der Referenzspannung $V_{ref}$ mittels eines Operationsverstärkers ($A_5$) verstärkt. Der Ausgang des abschließenden Operationsverstärkers ($A_5$) wird an den Eingang des Elektrometersubtrahierers rückgeführt, so dass ein Rückkopplungsstrom über einen Widerstand ($R_2$) fließt. Dadurch können die Source- und Drainspannungen des pH-ISFET gesteuert werden. Aufgrund dieser Steuerung können der Drainstrom ($I_D$) und die Drain-Source-Spannung ($V_{DS}$) konstant gehalten werden.

Die Beschaltung des pH-ISFET in einem Elektrometersubtrahierer hat jedoch den Nachteil, dass eine solche Schaltung sehr aufwendig zu realisieren ist. Insbesondere benötigt sie eine große Anzahl von Bauelementen, z.B. drei Operationsverstärker ($A_1$, $A_2$, $A_3$) und sechs ohmsche Widerstände ($R_3$, $R_4$, $R_5$, $R_6$, $R_7$, $R_8$). Aufgrund der großen Anzahl von Bauelementen ist die Herstellung der Schaltung zeitaufwendig und kompliziert. Die bekannte Beschaltung des pH-ISFET ist zudem äußerst anfällig gegenüber einer Temperaturdrift.

Die Aufgabe der vorliegenden Erfindung besteht deshalb darin, eine Vorrichtung der eingangs genannten Art dahingehend auszugestalten und weiterzubilden, dass ein pH-ISFET in einer möglichst einfachen Schaltung, die insbesondere wenige Bauelemente aufweist, integriert ist, die zudem bezüglich einer Temperaturdrift wenig anfällig ist und eine hohe Messgenauigkeit aufweist.

Zur Lösung dieser Aufgabe schlägt die Erfindung vor, dass der pH-ISFET mit mindestens drei Widerständen in der Brückenschaltung geschaltet ist, die Diagonalspannung der Brückenschaltung zwischen einem p-Eingang und einem n-Eingang eines Operationsverstärkers anliegt, dessen Ausgang über zwei Widerstände der Brückenschaltung zu den Eingängen des Operationsverstärkers rückgekoppelt ist und das Ausgangssignal der Vorrichung als eine Ausgangsspannung ausgebildet ist, die aus der Differenz des Drain-Potentials des pH-ISFET und eines Referenzpotentials der Referenzeleketrode gebildet ist.

Auf diese Weise ist der pH-ISFET in einer besonders einfach aufgebauten Schaltung integriert. Die Schaltung besteht aus einer äußerst geringen Anzahl von Bauteilen und kann somit kostengünstig hergestellt werden. Trotz des einfachen Aufbaus der Schaltung, weist die erfindungsgemäße Vorrichtung alle notwendigen Merkmale auf, um eine einwandfreie Funktion des pH-ISFET sicherzustellen. So liefert der in der Schaltung betriebene pH-ISFET bspw. ein Ausgangssignal, das zu der an dem pH-ISFET anliegenden Eingangsspannung proportional ist. Zudem ist das Ausgangssignal ein zuverlässiges Maß für die Konzentration an Ionen in der Messflüssigkeit und damit für den pH-Wert der Messflüssigkeit. Zwischen dem dekadischen Logarithmus der $H^+$-Ionenkonzentration in der Messflüssigkeit und dem Ausgangssignal der Vorrichtung besteht vorzugsweise ein linearer Zusammenhang.

Die an dem pH-ISFET anliegende Drain-Source-Spannung $U_{DS}$ wird mit Hilfe der Brückenspeisespannung $U_{BSS}$ und der Widerstände $R_2$ und $R_3$ eingestellt, über die der Ausgang des ersten Operationsverstärkers zu den Eingängen des ersten Operationsverstärkers rückgekoppelt ist. Dabei gilt der folgende Zusammenhang:

$$U_{DS}=U_{BSS}\cdot\frac{R_3}{R_2+R_3}$$

Der Drain-Source-Strom $I_{DS}$ kann dann mittels der Drain-Source-Spannung $U_{DS}$ und des Widerstands $R_1$ eingestellt werden, über den der Ausgang des ersten Operationsverstärkers zu den Eingängen des ersten Operationsverstärkers rückgekoppelt ist. Dabei gilt der folgende Zusammenhang:

$$I_{DS}=\frac{U_{BSS}-U_{DS}}{R_1}$$

Mittels dieser Zusammenhänge kann der Arbeitspunkt des pH-ISFET auf einfache Weise ohne Änderung der Brückenspeisespannung $U_{BSS}$ eingestellt werden.

Das Drain-Potential folgt der durch eine Änderung des pH-Werts hervorgerufenen Änderung des Gate-Potentials linear, da der Operationsverstärker als P-Regler arbeitet. Der Regelkreis hat die Übertragungsfunktion

$$\frac{\partial\varphi_D}{\partial\varphi_G}=1$$

In einem eingeregelten Zustand der Schaltung ist die Brücke abgeglichen, d. h. die Diagonalspannung $U_d$ = 0. In dem abgeglichenen Zustand der Brücke liegt zwischen den beiden in Reihe geschalteten Widerständen auf der einen Seite der Brücke das gleiche Potential an wie zwischen dem Widerstand und dem Drain des pH-ISFET auf der anderen Seite der Brücke. Deshalb kann in dem abgeglichenen Zustand der Brücke das Ausgangssignal auch zwischen den beiden in Reihe geschalteten Widerständen auf der einen Brückenseite abgegriffen werden.

Jeder der drei Widerstände der Brückenschaltung kann selbstverständlich auch durch eine Vielzahl von in Reihe oder parallel geschalteter Widerstände ersetzt werden. Das Ausgangssignal kann an beliebigen Stellen zwischen diesen Widerständen abgegriffen werden. Je nach der Größe der einzelnene Widerstände ist das derart abgegriffene Ausgangssignal um eine Offsetspannung gegenüber dem ursprünglich zwischen den beiden in Reihe geschalteten Widerständen auf der einen Seite der Brückenschaltung bzw. zwischen dem Drain des pH-ISFET und dem Widerstand auf der anderen Seite der Brückenschaltung abgegriffenen Ausgangssignal verschoben. Auf diese Weise kann der Nullpunkt der Schaltung (in der Regel bei pH 7) unabhängig von den übrigen Betriebsgrößen des pH-ISFET (insbesondere Drain-Source-Spannung $U_{DS}$ und Drain-Source-Strom $I_{DS}$) eingestellt werden.

Das Ausgangssignal der Vorrichtung ist unabhängig von Temperatureinflüssen, da die Vorrichtung eine Referenzelektrode aufweist, die ebenfalls in der Messflüssigkeit angeordnet ist. Das Ausgangssignal ist als eine Ausgangsspannung ausgebildet, die aus der Differenz des Drain-Potentials des pH-ISFET und eines Referenzpotentials der Referenzeleketrode gebildet ist.

Gemäß einer bevorzugten Weiterbildung der erfindungsgemäßen Vorrichtung wird vorgeschlagen, dass die Vorrichtung einen Referenz-ISFET aufweist, der ebenfalls in der Messflüssigkeit angeordnet ist, wobei das Ausgangssignal als eine Ausgangsspannung ausgebildet ist, die aus der Differenz des Drain-Potentials des pH-ISFET und des Drain-Potentials des Referenz-ISFET gebildet ist. Der Referenz-ISFET ist vorteilhafterweise in einer Brückenschaltung beschaltet, wie der pH-ISFET der erfindungsgemäßen Vorrichtung. Gemäß dieser Weiterbildung wird nicht nur die herkömmliche Glaselektrode zum Messen der Ionenkonzentration durch einen pH-ISFET ersetzt. Vielmehr wird auch die als herkömmliche Glaselektrode ausgebildete Referenzelektrode durch einen ISFET ersetzt.

Vorteilhafterweise ist der Ausgang des ersten Operationsverstärkers über einen Kondensator auf den n-Eingang des ersten Operationsverstärkers zurückgeführt. Dadurch können Schwingungen der Vorrichtung unterdrückt werden.

Gemäß einer bevorzugten Ausführungsform der vorliegenden Erfindung sind die Widerstände als ohmsche Widerstände ausgebildet. Es ist aber auch denkbar, die Widerstände, über die der Ausgang des Operationsverstärkers zu den Eingängen des ersten Operationsverstärkers rückgekoppelt ist, durch Stromquellen zu ersetzen. Eine Stromquelle kann durch einen in der Sättigung betriebenen Feldeffekttransistor realisiert werden.

Damit die Vorrichtung ein Ausgangssignal liefert, das eine möglichst geringe Lichtempfindlichkeit aufweist, wird gemäß einer vorteilhaften Weiterbildung der Erfindung vorgeschlagen, dass das Drain-Potential des pH-ISFET und ein Pseudoreferenzpotential einer Potentialableitelektrode ein erstes Differenzsignal bilden, und das Drain-Potential des Referenz-ISFET und das Pseudoreferenzpotential ein zweites Differenzsignal bilden, wobei das Ausgangssignal als die Differenz aus dem ersten und dem zweiten Differenzsignal ausgebildet ist, und an den Gate-Regionen des pH-ISFET und des Referenz-ISFET gleiche Lichtverhältnisse herrschen. Die Potentialableitelektrode ist vorzugsweise als ein Metallstift ausgebildet, der mit einer Silber- bzw. einer Silberchloridbeschichtung versehen ist. Der Referenz-ISFET ist in einer Messkammer mit konstantem pH-Wert (z. B. pH = 7) angeordnet. Die Messkammer steht über ein Diaphragma mit der Messflüssigkeit in Verbindung.

Bei dieser Vorrichtung werden der pH-ISFET und der Referenz-ISFET in einem sogenannten Differenzmode gegen das Pseudoreferenzpotential der Potentialableitelektrode betrieben. Aufgrund der Differenzenbildung sind die lichtabhängigen Signalanteile des pH-ISFET und des Referenz-ISFET in den beiden Differenzsignale fast vollständig kompensiert. Somit ist auch das Ausgangssignal weitestgehend unabhängig, bei identischen Lichtverhältnissen an den Gate-Regionen des pH-ISFET und des Referenz-ISFET sogar vollständig unabhängig, von den Lichtverhältnissen.

Auch bei dieser Vorrichtung, die in dem Differenzmode gegen das Pseudoreferenzpotential der Potentialableitelektrode betrieben wird, ist der pH-ISFET zusammen mit mindestens drei widerständen vorteilhafterweise in einer Brückenschaltung geschaltet. Der Betrieb der Vorrichtung gegen das Pseudoreferenzpotential der Potentialableitelektrode hat die angegebenen Vorteile aber auch ohne diese Merkmale des Kennzeichens des Patentanspruchs 1.

Die Brückenspeisespannung ist vorzugsweise konstant. Die konstante Brückenspeisespannung dient dem Operationsverstärker der Schaltung der erfindungsgemäßen Vorrichtung dazu, eine möglichst stabile Ausgangsspannung zu erzeugen. Die Stabilität der Ausgangsspannung kann nicht besser sein als die der Brückenspeisespannung. Um die Brückenspeisespannung möglichst stabil zu halten, kommt es deshalb auf eine möglichst stabile Spannungsquelle an.

Es sind verschiedene Möglichkeiten bekannt, eine konstante Spannung zu erzeugen. Gemäß einer besonders bevorzugten Ausführungsform wird vorgeschlagen, dass die Brückenspeisespannung als eine Bandabstands-Spannung einer sog. Bandgap-Diode ausgebildet ist.

Vorzugsweise ist die Drain-Source-Spannung des pH-ISFET während des Messvorgangs konstant. Zusätzlich oder alternativ ist der Drain-Source-Strom des pH-ISFET während des Messvorgangs konstant. Der Betriebszustand, in dem sowohl die Drain-Source-Spannung als auch der Drain-Source-Strom konstant sind wird auch als Constant-Charge-Mode (CCM) bezeichnet. Das Gate des ISFET stellt einen Kondensator dar. Durch einen Betrieb des ISFET im CCM bleibt die Ladung des Kondensator konstant, wodurch keine Umladevorgänge auftreten. Dadurch kann der ISFET schneller ansprechen und liefert einen genaueren Meßwert, da auch keine Hystereeffekte auftreten können.

Im folgenden werden zwei bevorzugte Ausführungsbeispiele der vorliegenden Erfindung anhand der Zeichnungen näher erläutert. Es zeigen:

Fig. 1     einen Schaltplan einer erfindungsgemäßen Vorrichtung gemäß einer ersten Ausführungsform, und

Fig. 2     eine schematische Darstellung einer erfindungsgemäßen Vorrichtung gemäß einer zweiten Ausführungsform.

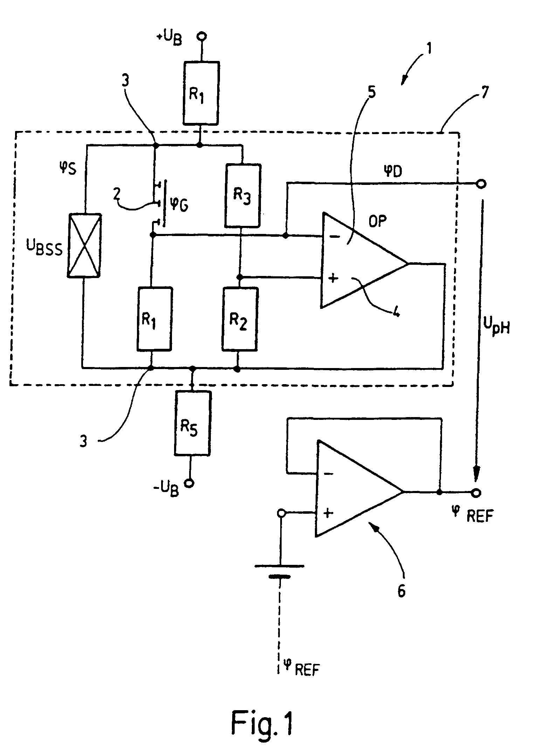

In Fig. 1 ist eine erfindungsgemäße Vorrichtung in ihrer Gesamtheit mit dem Bezugszeichen 1 bezeichnet. Die Vorrichtung 1 weist eine elektronische Schaltung auf, in der ein ionensensitiver Feldeffekttransistor (pH-ISFET) 2 integriert ist. Mittels des pH-ISFET 2 kann die Konzentration von Ionen in einer Meßflüssigkeit gemessen werden. Aus der Ionenkonzentration kann dann der pH-Wert der Meßflüssigkeit ermittelt werden.

Der pH-ISFET 2 ist zusammen mit drei Widerständen ($R_1$, $R_2$, $R_3$) in einer Brückenschaltung geschaltet. Über zwei Einspeisestellen 3 liegt eine konstante Brückenspeisespannung $U_{BSS}$ an der Brückenschaltung. Die Diagonalspannung $U_D$ der Brückenschaltung liegt zwischen einem p-Eingang 4 und einem n-Eingang 5 eines ersten Operationsverstärkers OP an. Der Ausgang des Operationsverstärkers OP ist über zwei der drei Widerstände ($R_1$, $R_2$) der Brückenschaltung zu den Eingängen 4, 5 des Operationsverstärkers OP rückgekoppelt. An dem n-Eingang 5 des Operationsverstärkers OP liegt das Drain-Potential $\varphi_D$ des pH-ISFET 2 an. Der Operationsverstärker OP arbeitet als P-Regler in der Schaltung. Aus diesem Grund folgt das Drain-Potential $\varphi_D$ dem Gate-Potential $\varphi_G$. Der erste Operationsverstärker OP ist symmetrisch beschaltet, d. h. an dessen Eingängen 4, 5 liegt in etwa die gleiche Impedanz bzgl.

Masse an. Das hat den Vorteil, daß Gleichtaktstörungen an den Eingängen 4, 5, auch aufgrund von temperaturbedingten widerstandsänderungen, besser kompensiert werden, was zu einer besseren Linearität des Operationsverstärkers OP führt.

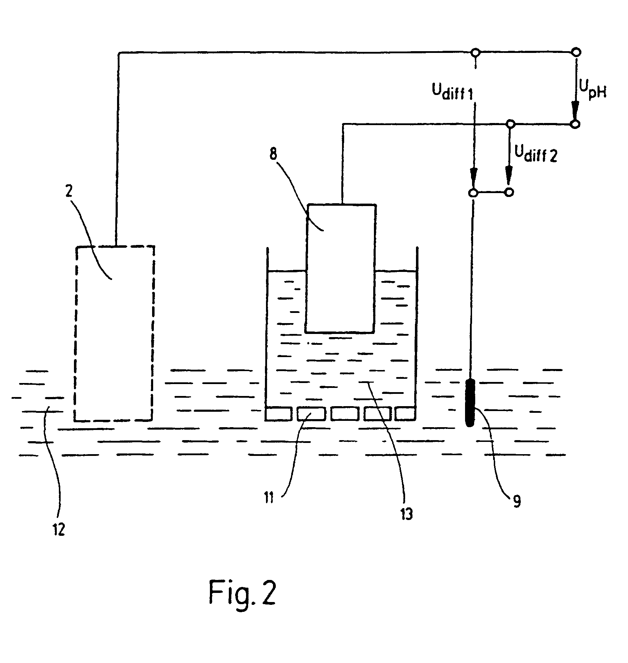

Durch eine Änderung des pH-Wertes der Meßflüssigkeit verändert sich das Gate-Potential $\varphi_G$ des pH-ISFET 2. Das führt zu einer Änderung des Kanal-Widerstands und damit auch zu einer Änderung des Drain-Potentials $\varphi_D$. Der n-Eingang 5 des Operationsverstärkers OP mit dem Drain-Potential $\varphi_D$ wird aus der Vorrichtung 1 herausgeführt. Die Differenz zwischen dem Drain-Potential $\varphi_D$ und einem Referenzpotential $\varphi_{REF}$ wird als Ausgangsspannung $U_{pH}$ bezeichnet. Die Ausgangsspannung $U_{pH}$ ist das Ausgangssignal der Vorrichtung 1 und ist proportional zu dem pH-Wert der Meßflüssigkeit. Die Ausgangsspannung $U_{pH}$ der Schaltung ist aufgrund des symmetrischen Aufbaus der Schaltung weitgehend unabhängig von der Temperatur. In der in Fig. 1 dargestellten Vorrichtung 1 wird das Referenzpotential $\varphi_{REF}$ mittels einer Referenzelektrode 6 erzeugt, die ebenfalls in der Meßflüssigkeit angeordnet ist. Es ist aber auch denkbar, die Referenzelektrode 6 durch eine weitere erfindungsgemäße Vorrichtung (vgl. Fig. 2) zu ersetzen. Dann könnte das Drain-Potential der weiteren erfindungsgemäßen Vorrichtung als Referenzpotential $\varphi_{REF}$ verwendet werden.

Die Widerstände $R_4$, $R_5$ und die übrige Schaltung 7 der Vorrichtung 1 wirken als Spannungsteiler. Zwischen den Einspeisestellen 3 kann sich somit eine von der Betriebsspannung $+U_B$, $-U_B$ verschiedene Spannung (Brückenspeisespannung $U_{BSS}$) einstellen. Die Brückenspeisespannung $U_{BSS}$ ist als eine sog. floatende Spannungsreferenz ohne festes Bezugspotential ausgebildet. An der oberen Einspeisestelle 3 der übrigen Schaltung 7 kann sich ein Potential zwischen $+U_B$-$U_{R4}$ und $-U_B$+$U_{BSS}$+$U_{R5}$ einstellen. An der unteren Einspeisestelle 3 der übrigen Schaltung 7 kann sich ein Potential zwischen $+U_B$-$U_{BSS}$-$U_{R4}$ und $-U_B$+$U_{R5}$ einstellen. Zwischen den beiden Einspeisestellen 3 liegt jedoch stets die Brückenspeisespannung $U_{BSS}$ an.

In Fig. 2 ist eine erfindungsgemäße Vorrichtung 1 dargestellt, bei der die Referenzelektrode 6 als ein Referenz-ISFET 8 ausgebildet ist. Damit die Vorrichtung 1 aus Fig. 2 ein Ausgangssignal $U_{pH}$ liefert, das eine möglichst geringe Lichtempfindlichkeit aufweist, bilden das Drain-Potential $\varphi_D$ des pH-ISFET 2 und ein Pseudoreferenzpotential einer Potentialableitelektrode 9 ein erstes Differenzsignal $U_{diff1}$, und das Drain-Potential $\varphi_{REF}$ des Referenz-ISFET 8 und das Pseudoreferenzpotential bilden ein zweites Differenzsignal $U_{diff2}$. Das Ausgangssignal $U_{pH}$ ist als die Differenz aus dem ersten Differenzsignal $U_{diff1}$ und dem zweiten Differenzsignal $U_{diff2}$ ausgebildet. An den Gate-Regionen des pH-ISFET 2 und des Referenz-ISFET 8 herrschen vorzugsweise die gleichen Lichtverhältnisse. Die Potentialableitelektrode 9 ist vorzugsweise als ein Metallstift ausgebildet, der mit einer Silber- bzw. einer Silberchloridbeschichtung versehen ist. Der Referenz-ISFET 8 ist in einer Meßkammer 10 angeordnet, in der sich eine Referenzlösung 13 mit einem konstanten pH-Wert (z. B. pH = 7) befindet. Die Meßkammer 10 steht über ein Diaphragma 11 mit der Meßflüssigkeit 12 in Verbindung.

**Patentansprüche**

1. Vorrichtung (1) zum Messen der Konzentration von Ionen, insbesondere von Wasserstoff ($H^+$)-Ionen, in einer Messflüssigkeit (12) mittels mindestens eines in der Messflüssigkeit (12) angeordneten Ionen-Sensitiven-Feld-Effekt-Transistors (pH-ISFET) (2), der zusammen mit Widerständen in einer Brückenschaltung geschaltet ist, wobei an Einspeisestellen (3) der Brückenschaltung eine Brückenspeisespannung ($U_{BSS}$) anliegt und die Vorrichtung (1) ein Ausgangssignal liefert, das ein Maß für die Ionen-Konzentration in der Messflüssigkeit (12) ist, und die Vorrichtung (1) eine Referenzelektrode (6) aufweist, die ebenfalls in der Messflüssigkeit (12) angeordnet ist, **dadurch gekennzeichnet, dass** der pH-ISFET (2) mit mindestens drei Widerständen ($R_1$, $R_2$, $R_3$) in der Brückenschaltung geschaltet ist, die Diagonalspannung ($U_d$) der Brückenschaltung zwischen einem p-Eingang (4) und einem n-Eingang (5) eines Operationsverstärkers (OP) anliegt, dessen Ausgang über zwei widerstände ($R_1$, $R_2$) der Brückenschaltung zu den Eingängen (4, 5) des Operationsverstärkers (OP) rückgekoppelt ist und das Ausgangssignal der Vorrichtung (1) als eine Ausgangsspannung ($U_{pH}$) ausgebildet ist, die aus der Differenz des Drain-Potentials ($\varphi_D$) des pH-ISFET (2) und eines Referenzpotentials ($\varphi_{REF}$) der Referenzeleketrode (6) gebildet ist.

2. Vorrichtung (1) nach Anspruch 1, **dadurch gekennzeichnet, dass** die Referenzelektrode (6) als ein Referenz-ISFET (8) ausgebildet ist und das Ausgangssignal der Vorrichtung (1) als eine Ausgangsspannung ($U_{pH}$) ausgebildet ist, die aus der Differenz des Drain-Potentials ($\varphi_D$) des pH-ISFET (2) und des Drain-Potentials ($\varphi_{REF}$) des Referenz-IS-FET (8) gebildet ist.

3. Vorrichtung (1) nach Anspruch 1 oder 2, **dadurch gekennzeichnet, dass** der Ausgang des Operationsverstärkers (OP) über einen Kondensator auf den n-Eingang (5) des Operationsverstärkers (OP) zurückgeführt ist.

4. Vorrichtung (1) nach einem der Ansprüche 1 bis 3, **dadurch gekennzeichnet, dass** die Widerstände ($R_1$, $R_2$, $R_3$) als ohmsche Widerstände ausgebildet sind.

5. Vorrichtung (1) nach einem der Ansprüche 1 bis 4, **dadurch gekennzeichnet, dass** das Drain-Potential ($\varphi_D$) des pH-ISFET (2) und ein Pseudoreferenzpotential einer Potentialableitelektrode (9) ein erstes Differenzsignal ($U_{diff1}$) bilden und das Drain-Potential ($\varphi_{REF}$) des Referenz-ISFET (8) und das Pseudoreferenzpotential ein zweites Differenzsignal ($U_{diff2}$) bilden, wobei das Ausgangssignal ($U_{pH}$) als die Differenz aus dem ersten Differenzsignal ($U_{diff1}$) und dem zweiten Differenzsignal ($U_{diff2}$) ausgebildet ist und an den Gate-Regionen des pH-ISFET (2) und des Referenz-ISFET (8) gleiche Lichtverhältnisse herrschen.

6. Vorrichtung (1) nach einem der Ansprüche 1 bis 5, **dadurch gekennzeichnet, dass** die Brückenspeisespannung ($U_{BSS}$) als eine Bandabstands-Referenzspannung einer Bandgap-Diode ausgebildet ist.

7. Vorrichtung (1) nach einem der Ansprüche 1 bis 6, **dadurch gekennzeichnet, dass** die Drain-Source-Spannung ($U_{DS}$) des pH-ISFET (2) während des Messvorgangs konstant ist.

8. Vorrichtung (1) nach einem der Ansprüche 1 bis 7, **dadurch gekennzeichnet, dass** der Drain-Source-Strom ($I_{DS}$) des pH-ISFET (2) während des Messvorgangs konstant ist.

## Claims

1. Device (1) for measuring the concentration of ions, in particular hydrogen ($H^+$) ions, in a test liquid (12) by means of at least one ion-sensitive field effect transistor (pH-ISFET) (2) arranged in the test liquid (12) and connected, together with resistors, in a bridge circuit, whereby a bridge supply voltage ($U_{BSS}$) is applied to supply sites (3) of the bridge circuit and the device (1) provides an output signal that is a measure of the ion concentration in the test liquid (12), and the device (1) has a reference electrode (6) which is also arranged in the test liquid (12), **characterised in that** the pH-ISFET (2) is connected to at least three resistors ($R_1$, $R_2$, $R_3$) in the bridge circuit, the diagonal voltage ($U_d$) of the bridge circuit exists between a p-input (4) and an n-input (5) of an operational amplifier (OP) whose output is fed back via two resistors ($R_1$, $R_2$) of the bridge circuit to the inputs (4, 5) of the operational amplifier (OP) and the output signal of the device (1) takes the form of an output voltage ($U_{pH}$) comprising the difference between the drain potential ($\varphi_D$) of the pH-ISFET (2) and a reference potential ($\varphi_{REF}$) of the reference electrode (6).

2. Device (1) according to claim 1, **characterised in that** the reference electrode (6) is designed as a reference-ISFET (8) and the output signal of the device (1) takes the form of an output voltage ($U_{pH}$) comprising the difference between the drain potential ($\varphi_D$) of the pH-ISFET (2) and the drain potential ($\varphi_{REF}$) of the reference-ISFET (8).

3. Device (1) according to claim 1 or 2, **characterised in that** the output of the operational amplifier (OP) is fed back via a capacitor to the n-input (5) of the operational amplifier (OP).

4. Device (1) according to one of the claims 1 to 3, **characterised in that** the resistors ($R_1$, $R_2$, $R_3$) are designed as ohmic resistors.

5. Device (1) according to one of the claims 1 to 4, **characterised in that** the drain potential ($\varphi_D$) of the pH-ISFET (2) and a pseudoreference potential of a potential reference electrode (9) comprise a first differential signal ($U_{diff1}$) and the drain potential ($\varphi_{REF}$) of the reference-ISFET (8) and the pseudoreference potential comprise a second differential signal ($U_{diff2}$), whereby the output signal ($U_{pH}$) takes the form of the difference between the first differential signal ($U_{diff1}$) and the second differential signal ($U_{diff2}$), and the same light conditions exist at the gate regions of the pH-ISFET (2) and the reference-ISFET (8).

6. Device (1) according to one of the claims 1 to 5, **characterised in that** the bridge supply voltage ($U_{BSS}$) comprises a band gap reference voltage of a band gap diode.

7. Device (1) according to one of the claims 1 to 6, **characterised in that** the drain-source voltage ($U_{DS}$) of the pH-ISFET (2) is constant during the measuring process.

8. Device (1) according to one of the claims 1 to 7, **characterised in that** the drain source current ($I_{DS}$) of the pH-ISFET (2) is constant during the measuring process.

**Revendications**

1. Dispositif (1) pour mesurer la concentration d'ions, en particulier d'ions d'hydrogène (H$^+$) dans un liquide de mesure (12) au moyen d'au moins un transistor à effet de champ ionosensible (ISFET de pH) (2) disposé dans le liquide de mesure (12) qui est monté conjointement avec des résistances dans un circuit en pont, une tension d'alimentation du pont (U$_{BSS}$) étant appliquée aux points d'alimentation (3) du circuit en pont et le dispositif (1) fournissant un signal de sortie qui est une mesure de la concentration ionique du liquide de mesure (12) et le dispositif (1) présentant une électrode de référence (6) qui est également disposée dans le liquide de mesure (12), **caractérisé en ce que** l'ISFET de pH (2) est monté avec au moins trois résistances (R$_1$, R$_2$, R$_3$) dans le circuit en pont, la tension diagonale (U$_d$) du circuit en pont étant appliquée entre une entrée p (4) et une entrée n (5) d'un amplificateur opérationnel (OP), dont la sortie est réinjectée par l'intermédiaire de deux résistances (R$_1$, R$_2$) du circuit en pont aux entrées (4, 5) de l'amplificateur opérationnel (OP) et le signal de sortie du dispositif (1) étant prévu comme une tension de sortie (U$_{pH}$) qui est formée par la différence entre le potentiel de drain (φ$_D$) de l'ISFET de pH (2) et un potentiel de référence (φ$_{REF}$) de l'électrode de référence (6).

2. Dispositif (1) selon la revendication 1, **caractérisé en ce que** l'électrode de référence (6) est prévue comme un ISFET de référence (8) et le signal de sortie du dispositif (1) comme une tension de sortie (U$_{pH}$) qui est formée par la différence entre le potentiel de drain (φ$_D$) de l'ISFET de pH (2) et le potentiel de drain (φ$_{REF}$) de l'ISFET de référence (8).

3. Dispositif (1) selon la revendication 1 ou 2, **caractérisé en ce que** la sortie de l'amplificateur opérationnel (OP) est ramenée à l'entrée n (5) de l'amplificateur opérationnel (OP) par l'intermédiaire d'un condensateur.

4. Dispositif (1) selon l'une des revendications 1 à 3, **caractérisé en ce que** les résistances (R$_1$, R$_2$, R$_3$) sont prévues comme des résistances ohmiques.

5. Dispositif (1) selon l'une des revendications 1 à 4, **caractérisé en ce que** le potentiel de drain (φ$_D$) de l'ISFET de pH (2) et un pseudo-potentiel de référence d'une électrode de dérivation de potentiel (9) forment un premier signal différentiel (U$_{diff1}$) et **en ce que** le potentiel de drain (φ$_{REF}$) de l'ISFET de référence (8) et le pseudo-potentiel de référence forment un deuxième signal différentiel (U$_{diff2}$), le signal de sortie (U$_{pH}$) étant prévu comme la différence entre le premier signal différentiel (U$_{diff1}$) et le deuxième signal différentiel (U$_{diff2}$) et des conditions de lumière identiques régnant aux régions de grille de l'ISFET de pH (2) et de l'ISFET de référence (8).

6. Dispositif (1) selon l'une des revendications 1 à 5, **caractérisé en ce que** la tension d'alimentation du pont (U$_{BSS}$) est prévue comme une tension de référence d'intervalle de bande d'une diode à bande interdite.

7. Dispositif (1) selon l'une des revendications 1 à 6, **caractérisé en ce que** la tension drain-source (U$_{DS}$) de l'ISFET de pH (2) est constante pendant le processus de mesure.

8. Dispositif (1) selon l'une des revendications 1 à 7, **caractérisé en ce que** le courant drain-source (I$_{DS}$) de l'ISFET de pH (2) est constant pendant le processus de mesure.

Fig.1

Fig. 2